# EUROPEAN PATENT APPLICATION

(11) **EP 1 116 887 A2**
(43) Date of publication of application: **18.07.2001**
(21) Application number: 01300012.0
(22) Date of filing: 03.01.2001
(51) Int. Cl.: F16B 21/08, F16B 21/12, B60B 7/06

(54) **Wheel trim fastener**

(30) Priority: 14.01.2000 GB 0000730
(71) Applicant: McKechnie Specialist Products Limited, Aldrige, Walsall, West Midlands WS9 8DS (US)
(72) Inventor: Perry, Colin B., Swansea, West Glamorgan SA4 3EZ (GB)
(74) Representative: Barnfather, Karl Jon, Dr.

(57) **Abstract**

A wheel trim fastener for connecting a wheel trim or the like to a wheel hub, comprising an elongate body having a first and second end, which second end comprises a recess dimensioned to accept a boss attached to or forming an integral part of the wheel trim or the wheel hub, wherein the recess houses at least one gripping element such as a sprag so that once inserted, the boss may not be readily removed from the recess.

## Description

The invention relates to a fastener, more particularly but not exclusively to a wheel trim fastener for retaining wheel covers to vehicle wheels.

Wheel trim fasteners forming an integral part of a wheel trim cover or wheel hub/rim are well known as are such fasteners incorporating snap-in spring clips. Spring clips connected to a wheel trim or hub cap that grip a wheel hub circumferentially are also known. One problem with the integral type fastener is that the connection between the fastener body and main wheel trim tends to shear in use resulting in the loss of the wheel trim or hub cap.

An object of the invention is to provide an improved fastener for fixedly connecting a first member having a boss to a second member having a hole, the fastener providing a simple push fit over the boss and means of resisting subsequent removal of the boss. Other objectives are to allow a simple boss design that is less prone to shearing than known fastening means, and to provide a push fit fastener that provides the required retention and can be assembled easily such as with the minimum of force.

According to a first aspect of the invention there is provided a wheel trim fastener for connecting a wheel trim or the like to a wheel hub comprising an elongated body having a first and second end, which second end comprises a recess dimensioned to accept a boss attached to or forming an integral part of the wheel trim or the wheel hub, wherein the recess houses at least one gripping element such as a sprag so that once inserted the boss may not be readily removed from the recess.

Preferably the fastener comprises a plurality of sprags located within the wall of the recess and spaced equidistantly from each other. Preferably the sprags are partly formed by cutting or stamping notches in the body wall material. Preferably the sprags are substantially triangular in shape with an apex of the triangle pointing away from the second end of the body portion.

In another aspect the wheel trim fastener comprises an elongated body having plurality of resilient splayed legs extending from one end of the body dimensioned to fixedly engage a hole in the wheel hub, the splayed legs preferably being spaced generally equidistantly apart, preferably the splayed legs have rounded knuckles located along their length and facing outwardly whereby the splayed legs can readily engage holes in a wheel hub without damaging the wheel finish. Preferably, the ratio of the length of the splayed legs T to the length of the body L is in the range 0.3:1 to 0.8:1 and preferably in the range 0.4:1 to 0.6:1.

Preferably, the wheel trim fastener is formed from a single sheet of metal and has a longitudinal slit in the body portion; preferably the slit being non-linear, so helping to prevent entanglement of fasteners when stored in bulk.

Preferably, the body is generally cylindrical in shape, and preferably the ratio of the length of the body L to the external diameter of the body D is in the range 2:1 to 10:1 and preferably in the range 3:1 to 6:1.

Preferably the wheel trim fastener is made of resilient material such as heat treated carbon steel.

Another aspect the invention comprises a method of fixing a wheel trim or the like to a wheel member comprising the following steps:-
(a) providing one or more bosses on the inside face of the wheel trim and corresponding one or more holes with a corresponding orientation on the wheel hub,
(b) providing wheel trim fasteners comprising an elongated body having a first and second end, a plurality of splayed tension legs extending from the first end of the body Dimensioned to fixedly engage a hole in the wheel hub, and a recess in the second end of the body being dimensioned to accept a boss attached to or forming an integral part of the wheel trim, wherein the recess has one or more sprags that retain the boss once inserted so that it may not be readily removed from the recess,
(c) locating the second end of the body of an associated fastener over each boss of the wheel trim and pushing the two together,
(d) presenting the wheel trim with attached fasteners and their sets of splayed legs to the wheel hub, and locating the splayed legs so as to fasten the splayed legs in corresponding holes of the wheel hub.

An embodiment of the invention will now be described, by way of example only, with reference to the following diagrammatic drawings in which:
Figure 1 is a side view of the fastener and sectioned parts of a wheel hub and boss attached to a wheel trim;
Figure 2 is a partly sectioned side view of the fastener of Figure 1 engaged within the wheel hub and around the boss of a wheel trim; and
Figure 3 is an enlarged plan view of the fastener of Figure 1.

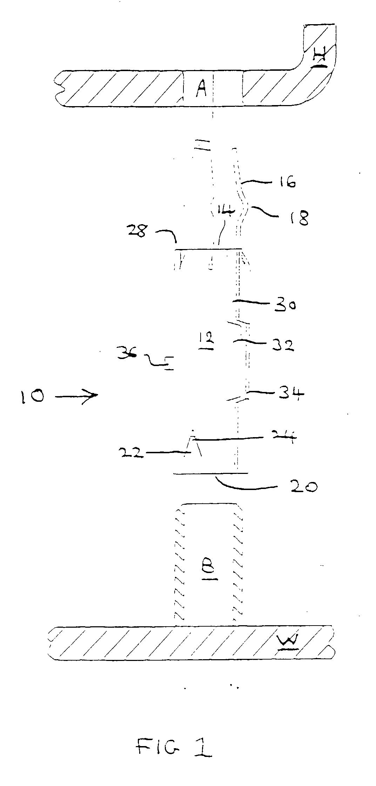

Referring to Figures 1 to 3, there is shown a fastener 10 according to one embodiment of the invention, comprising a generally hollow cylindrical body shell portion 12. The first end 14 of the body 12 is integrally formed with three splayed legs 16. Each leg 16 tapers radially inwards as it extends outwards beyond the first end 14 of the body 12. This tapered profile facilitates placement of the legs within a hole in a wheel member during production assembly conditions. Each splayed leg 16 has a knuckle section 18 having an arcuate or curved outer profiles. These knuckles 18 reduce the force required to fit the fastener and also provide the required retention during use. The splayed legs 16 initially deflect radially inwards as they are pushed into holes and then expand outwardly again when the fastener is pushed fully home.

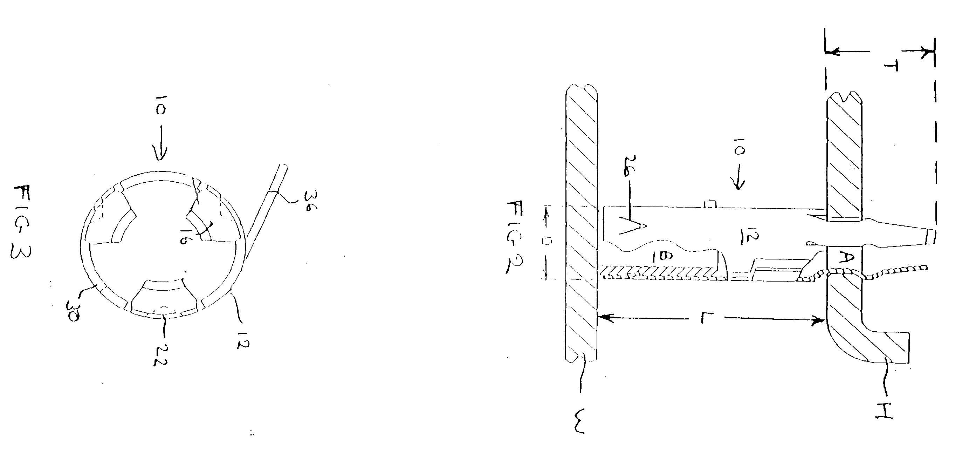

The second end of the body 12 provides a recess 20 within which a boss B, normally made from plastics material, is received. The boss B is either attached to or integral with the wheel trim or wheel cover W. The diameter of the recess 20 is slightly greater than the external diameter or outer diameter of boss B. The boss can be simply cylindrical in shape and is thus easier to manufacture than known alternatives that require additional connection features. On the body around the recess 20 are three equidistantly spaced gripping elements here in the form of triangular sprags 22. The apex of each sprag 24 points upwardly (as viewed in Figures 1 and 2). The sprags are formed by cutting or stamping V-shaped notches 26 in the body. When the second end of the fastener 10 is pushed over boss B the apex portion of the sprags 24 are pushed radially outwards and this combined with the resilient nature of the body 12 ensures that the boss B is firmly gripped by the fastener 10. The fastener 10 is not subsequently easily removed as on attempting to withdraw the fastener 10 as the sprags 22 bite into the outer surface of the boss B.

The body 12 has a rim or knuckle portion 28 at its first end for locating this end of the body against a wheel member. The body 12 has a longitudinal slit 30 extending along at least part and preferably its entire length. The slit 30 is provided partly to facilitate manufacture and also to impart resilience to the body 12. The slit is non-linear and can be square-wave in shape, this feature being formed by a protruding edge portion 32 within the wall of the body on one side of the slit 30 and a slightly larger recess 34 within the wall of the body on the other side of the slit. The use of a non-linear slit 30 also greatly reduces entanglement of individual fasteners during bulk storage.

A thin linear arm 36 extends tangentially from the outer wall of the body (see Figure 3). The arm is normally located about midway along the length of the body (see Figure 1). The arm 36 serves an anti-roll function and also facilitates assembly of the fastener by production line means.

The entire fastener is preferably manufactured from a single sheet of material, such as carbon steel, in which case after the fastener has been formed it is heat treated to impart resilient properties. It is preferable that the splayed legs 14 spring back outwardly after insertion within a hole and that the slit 30 contracts in width after it has expanded slightly to accept a boss B.

The length of the body portion L is selected to achieve the desired spacing between the wheel member, for example the wheel hub, and the wheel trim or wheel cover. In use preferably at least three fasteners are employed to secure a wheel trim or cover to a wheel member. Thus, the wheel trim or wheel cover may have three bosses arranged equidistantly on a circular pitch, the wheel hub having an equal number of holes also circumferentially spaced so as to align with the bosses.

In assembly, the second end of each fastener 10 is first located adjacent the boss, the boss B then being inserted within the recess 20 and being retained in place by the sprags 22. With the fasteners so attached, the wheel trim W is offered up to the wheel. The splayed legs of the three or more fasteners are then located within the corresponding holes A of the wheel member H and pushed home. Initially, during location of the splayed legs the arcuate (or rounded) knuckles 18 contact the edge of the hole A. This aids insertion of the fastener 10 in the hole with minimum force, thereby preventing damage to the finish of wheel H.

It will be readily apparent to those skilled in the art that the body 12 need not necessarily be of circular cross section and that other profiles such as a square or rectangular cross section are possible. Likewise the sprags 22 need not necessarily be formed by stamping or cutting V-shaped notches 26 in the body wall. The non-linear slit 30 need not be square wave shaped and can take a variety of alternative shapes including a notch shaped profile. It is not essential that the fastener engages a boss on the wheel trim and a hole in the wheel hub. Thus, the fastener may engage a hole in the wheel trim and a boss on the wheel hub.

## Claims

1. A wheel trim fastener for connecting a wheel trim or the like to a wheel hub, comprising an elongate body having a first and second end, which second end comprises a recess dimensioned to accept a boss attached to or forming an integral part of the wheel trim or the wheel hub, wherein the recess houses at least one gripping element such as a sprag so that once inserted, the boss may not be readily removed from the recess.

2. A fastener according to claim 1 further comprising a plurality of gripping element or sprags located within the wall of the recess.

3. A fastener according to claim 2 wherein the gripping elements or sprags are equally distantly spaced from one another.

4. A fastener according to claim 1, 2 or 3 wherein the sprag or sprags are partially formed by cutting or stamping notches in the body wall material.

5. A fastener according to any preceding claim wherein the sprag or sprags are substantially triangular in shape preferably having the apex of the triangle pointing away from the second end of the body portion.

6. A fastener comprising an elongate body having a plurality of resilient splayed legs extending from one end of the body dimensioned to fixedly engage a hole in the wheel hub, the splayed legs preferably being spaced generally equidistantly apart.

7. A fastener according to claim 6 wherein the splayed legs have rounded nuckles located along their length and facing outwardly and whereby the splayed legs are readily engagable in holes in a wheel hub without damaging the wheel finish.

8. A fastener according to claim 6 or 7 wherein the ratio of the length of the splayed legs (T) to the length of the body (L) is in the range 0.3 to 1, to 0.8 to 1, and more preferably the ratio is in the range 0.4 to 1, to 0.6 to 1.

9. A fastener according to any preceding claim formed from a single sheet of metal and comprising a longitudinal slit in the body portion.

10. A fastener according to claim 9 wherein the slit is non-linear.

11. A fastener according to any preceding claim wherein the body is generally cylindrical in shape.

12. A fastener according to claim 11 wherein preferably the ratio of the length of the body (L) to the external diameter of the body (D) is in the range of 2 to 1, to 10 to 1, and preferably in the range of 3 to 1, to 6 to 1.

13. A wheel trim fastener according to any preceding claims comprising resilient material such as heat treated carbon steel.

14. A method of fixing the wheel trim of the like to a wheel member comprising the following steps;
(a) providing one or more bosses on the inside face of the wheel trim and corresponding one or more holes with a corresponding orientation on the wheel hub,
(b) providing wheel trim fasteners comprising an elongated body having a first and second end, a plurality of splayed tension legs extending from the first end of the body dimensioned to fixedly engage a hole in the wheel hub, and a recess in the second end of the body being dimensioned to accept a boss attached to or forming an integral part of the wheel trim, wherein the recess has one or more sprags that retain the boss once inserted so that it may not be readily removed from the recess,
(c) locating the second end of the body of an associated fastener over each boss of the wheel trim and pushing the two together, and
(d) presenting the wheel trim with attached fasteners and their sets of splayed legs to the wheel hub, and locating the splayed legs so as to fasten the splayed legs in corresponding holes of the wheel hub.
